# EUROPEAN PATENT APPLICATION

(11) **EP 4 686 813 A1**
(43) Date of publication of application: **04.02.2026**
(21) Application number: 25193596.1
(22) Date of filing: 01.08.2025
(51) Int. Cl.: F02C 1/10, F02C 3/22, F02C 6/18, F02C 7/224

(54) **CRYOGENIC BOTTOMING CYCLE CONTROL SYSTEM**

(30) Priority: 02.08.2024 US 202418793300
(71) Applicant: RTX Corporation, Farmington, CT 06032 (US)
(72) Inventor: EVANS, Brandon M., Farmington, 06032 (US); TERWILLIGER, Neil J., Farmington, 06032 (US)
(74) Representative: Dehns

(57) **Abstract**

An aircraft propulsion system (20) includes a core engine (25) driving a propulsive fan (22), a cryogenic fuel system (62) and a bottoming cycle (64) where a working fluid (118) within a closed circuit (110) is heated and expanded through a bottoming turbine (104) to generate shaft power. An actuator control (68) is configured to vary a parameter of the bottoming cycle (64), and a controller (66) is programmed to operate a control system (65) to adjust operation of the bottoming cycle (64) to correspond to operation of the core engine.

## Description

### TECHNICAL FIELD

The present invention relates generally to a bottom cycle for an aircraft propulsion system and more specifically to a system and method for controlling operation of a cryogenic bottoming cycle.

### BACKGROUND OF THE INVENTION

Gas turbine engines typically include a compressor where inlet air is compressed and delivered into a combustor. In the combustor, the compressed air is mixed with fuel and ignited to generate an exhaust gas flow. The exhaust flow is expanded through a turbine section to generate shaft power used to drive the compressor and a propulsive fan. A bottoming cycle may be utilized to recover heat from the exhaust gas flow to generate additional useful work. Bottoming cycle operation is constrained by operating conditions of the gas turbine engine and therefore may not operate at optimally at all operating points.

### SUMMARY OF THE INVENTION

An aircraft propulsion system according to an aspect of the invention, among other possible things, includes a core engine that includes a compressor (e.g., a main compressor) where an inlet airflow is compressed and communicated to a combustor to generate an exhaust gas flow (e.g., the combustor may be configured to ignite a mixture of compressed air and a fuel) that is expanded through a turbine section (e.g., a main turbine section) to generate power used to drive the compressor and a propulsive fan, a cryogenic fuel system that includes a cryogenic fuel storage tank, a fuel flow path for routing the cryogenic fuel to the combustor of the core engine, a bottoming cycle where a working fluid within a closed circuit is heated and expanded through a bottom turbine to generate shaft power, a first heat exchanger where heat is input into the working fluid, and a second heat exchanger where the working fluid is cooled by the cryogenic fuel flow, a monitoring system where information is indicative of operation of the core engine and the bottoming cycle, at least one actuator control that is configured to vary a parameter of the bottoming cycle system, and a controller that is programmed to operate at least one control system based on information from the monitoring system to adjust operation of the bottoming cycle to correspond to operation of the core engine.

In any of the aspects or embodiments described above or herein, the controller may be further programmed to vary operation (of the aircraft propulsion system or control system) based on a predefined operating mode. The predefined operating mode may include at least one of a startup mode, an operating mode, a shutdown mode, and a transient mode.

In any of the aspects or embodiments described above or herein, the monitoring system may generate information that is indicative of at least one of a temperature and a pressure of the compressor section.

In any of the aspects or embodiments described above or herein, the monitoring system may generate information that is indicative of at least one of a temperature and a pressure of the turbine section.

In any of the aspects or embodiments described above or herein, the monitoring system may generate information that is indicative of a heat capacity of the bottoming cycle flow at an inlet of the second heat exchanger that includes a capacity for the cryogenic fuel flow to accept heat from a working fluid of the bottoming cycle.

In any of the aspects or embodiments described above or herein, the monitoring system may generate information that is indicative of a fluid state of the cryogenic fuel flow within the second heat exchanger.

In any of the aspects or embodiments described above or herein, the monitoring system may generate information that is indicative of a fuel demand by the core engine.

In any of the aspects or embodiments described above or herein, the at least one control system may include a flow control device for adjusting a flow rate of the cryogenic fuel through the second heat exchanger.

In any of the aspects or embodiments described above or herein, the at least one control system may include a valve for controlling a flow of the cryogenic fuel through a bypass passage where a portion of the cryogenic fuel flow is routed around the second heat exchanger.

In any of the aspects or embodiments described above or herein, the aircraft propulsion system may further include a generator that is driven by the bottoming turbine. The controller may be further programmed to adjust a load on the bottoming turbine for controlling operation of the bottoming cycle.

In any of the aspects or embodiments described above or herein, the bottoming cycle may further include a working fluid volume control system where a quantity of working fluid within the closed circuit is varied to adjust operation of the bottoming cycle. The controller may be further programmed to operate the working fluid volume control system.

In any of the aspects or embodiments described above or herein, the at least one control system may include an exhaust gas flow control device for controlling an amount of the exhaust gas flow through the first heat exchanger. The controller may be further programmed to operate the exhaust gas flow device to control heat input into the working fluid flow for adjusting operation of the bottoming cycle.

In any of the aspects or embodiments described above or herein, the exhaust gas flow control device may include at least one of an exhaust compressor, a variable area exhaust nozzle, and an exhaust bypass where a portion of the exhaust gas flow is routed around the first heat exchanger.

A method of operating an aircraft propulsion system according to another aspect of the invention, among other possible things, includes a core engine and a bottoming cycle. The method includes generating an exhaust gas flow in a combustor by igniting a mixture of compressed air and a fuel (e.g., a cryogenic fuel) within the core engine, communicating thermal energy from the exhaust gas flow into a working fluid within the bottoming cycle where the working fluid within a closed circuit is heated and expanded through a bottoming turbine to generate shaft power, cooling the working fluid that is exhausted from the bottoming turbine in a fuel/working fluid heat exchanger where a cryogenic fuel (e.g., the fuel) accepts heat from the working fluid mixture, and monitoring operation of the core engine and the bottoming cycle and generating information of at least one operating parameter of the core engine and the bottoming cycle, communicating the information regarding the at least one operating parameter to a controller, determining a control action to adjust the operation of at least one control system for adjusting operation of the bottoming cycle to deviate from a current operating parameter, and operating the at least one control system to change a parameter of the bottoming cycle to align operation with the core engine.

In any of the aspects or embodiments described above or herein, determining the control action may further include determining an optimal amount of heat that is capable of being absorbed by the flow of cryogenic fuel.

In any of the aspects or embodiments described above or herein, the control action may include adjusting a flow of the cryogenic fuel through a fuel/working fluid heat exchanger to adjust heat input from the working fluid to the cryogenic fuel.

In any of the aspects or embodiments described above or herein, the control action may include bypassing a portion of the cryogenic fuel flow around the fuel/working fluid heat exchanger.

In any of the aspects or embodiments described above or herein, the at least one control system may include an exhaust gas flow control device for controlling an amount of the exhaust gas flow through a heat exchanger that transfers heat into the working fluid. The method may further include operating the exhaust gas flow device to control heat input into the working fluid flow for adjusting operation of the bottoming cycle.

In any of the aspects or embodiments described above or herein, the bottoming cycle may further include a working fluid volume control system where a quantity of working fluid within the closed circuit is varied to adjust operation of the bottoming cycle. The method may further include operating the working fluid volume control system to adjust the volume of working fluid flow to align operation of the bottoming cycle with the core engine.

In any of the aspects or embodiments described above or herein, the aircraft propulsion system further includes a generator that is driven by the bottoming turbine. The method may further include adjusting a load on the bottoming turbine to align operation of the bottoming cycle to operation of the core engine.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of an example aircraft propulsion system including a bottoming cycle and control system.
Figure 2 is a simplified schematic view of the example aircraft propulsion system including the bottoming cycle and control system.
Figure 3 is a schematic view of the example control system.
Figure 4 is a flow diagram illustrating steps in an example operational embodiment.

### DETAILED DESCRIPTION

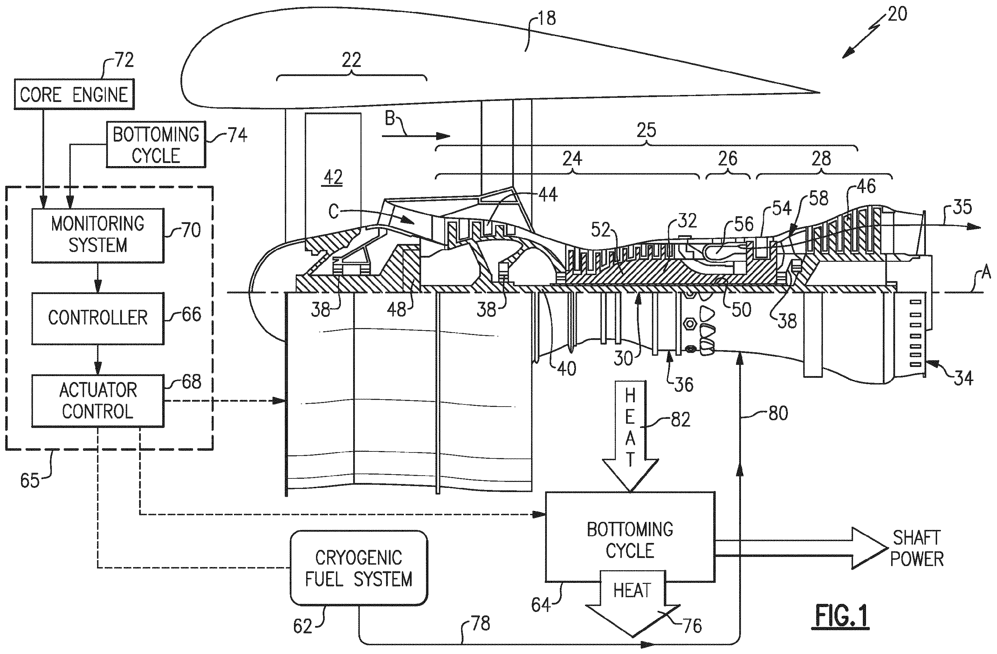

Figure 1 schematically illustrates an aircraft propulsion system 20 that includes a cryogenic fuel system 62, a bottoming cycle 64 and a control system 65 for adjusting operation of the bottoming cycle 64 to correspond with operation of a core engine 25. The control system 65 includes a monitoring system 70 that provides information to a controller 66 that is utilized to generate commands that are used by an actuator control 68 to adjust operation of the propulsion system. In one example embodiment, the propulsion system 20 is controlled to optimize shaft power generated by the bottoming cycle 64 in view of a core engine operating condition.

The example propulsion system 20 is disclosed as a two-spool turbofan that generally incorporates a fan section 22 and a core engine 25 that generates an exhaust gas flow 35 for driving the fan section 22. The core engine 25 includes a compressor section 24, a combustor section 26, and a turbine section 28. The fan section 22 may include a single-stage fan having a plurality of fan blades 42. The fan blades 42 may have a fixed stagger angle or may have a variable pitch to direct incoming airflow from an engine inlet. The fan 22 drives air along a bypass flow path B defined within a nacelle 18, and also drives air along a core flow path C for compression and communication into the combustor section 26 then expansion through the turbine section 28. Exhaust gas flow 35 is finally exhausted through a nozzle 34.

The exemplary core engine 25 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner engine shaft 40 that interconnects a first (or low) pressure compressor 44 and a first (or low) pressure turbine 46. The inner engine shaft 40 is connected to the fan section 22 through a speed change mechanism, which in one example is illustrated as a geared architecture 48 to drive the fan section 22 at a lower speed than the low speed spool 30. The inner engine shaft 40 may interconnect the low pressure compressor 44 and low pressure turbine 46 such that the low pressure compressor 44 and low pressure turbine 46 are rotatable at a common speed and in a common direction. Although this application discloses geared architecture 48, its teaching may benefit direct drive engines having no geared architecture.

The high speed spool 32 includes an outer engine shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner engine shaft 40 and the outer engine shaft 50 are concentric and rotate via bearing systems 38 about the engine central longitudinal axis A which is collinear with their longitudinal axes.

Although an example engine architecture is disclosed by way of example, other turbine engine architectures are within the contemplation and scope of this disclosure. Moreover, although the disclosed non-limiting embodiment depicts a turbofan turbine engine, it should be understood that the concepts described herein are not limited to use with turbofans as the teachings may be applied to other types of turbine engines. Additionally, the features of this disclosure may be applied to other engine configurations utilized to generate shaft power.

The bottoming cycle 64 recovers heat 82 from the core engine 25 and generates a power output that may be utilized for operation of an engine or aircraft accessory device or system. In one example embodiment, the bottoming cycle 64 generates shaft power 82 to drive an engine or aircraft accessory device. The cryogenic fuel system 62 generates a liquid fuel flow 78 that accepts heat 76 from the bottoming cycle 64. The heat 76 is utilized to vaporize the liquid fuel flow at least partially 78. Other heat sources may be used to generate a substantially complete vaporized fuel flow 80 for injection into the combustor section 26 of the core engine 25. Operation of the bottoming cycle 64 to recover energy is dependent on the heat input 82 and the capacity of the fuel flow 78 to absorb and remove heat 76 from the bottoming cycle 64. Operation and performance of the bottom cycle 64 is further subject to the priority of operating the core engine 25 to generate the desired propulsive power. Accordingly, changes in power demands of the core engine 25 will vary the amount of power that the bottoming cycle 64 is capable of generating. The example control system 65 governs operation of the bottoming cycle 64 and the fuel system 62 to align operation to the operation of the core engine 25.

The control system 65 includes a controller 66 that receives information indicative of propulsion system operation from a monitoring system 70 that is utilized to generate commands executed by an actuator control 68. The monitoring system 70 receives information indicative of current operation of the propulsion system 20 including information indicative of operation of the core engine 72 and the bottoming cycle 74. The information is utilized to adapt operation of the bottoming cycle 64 to maximize power production.

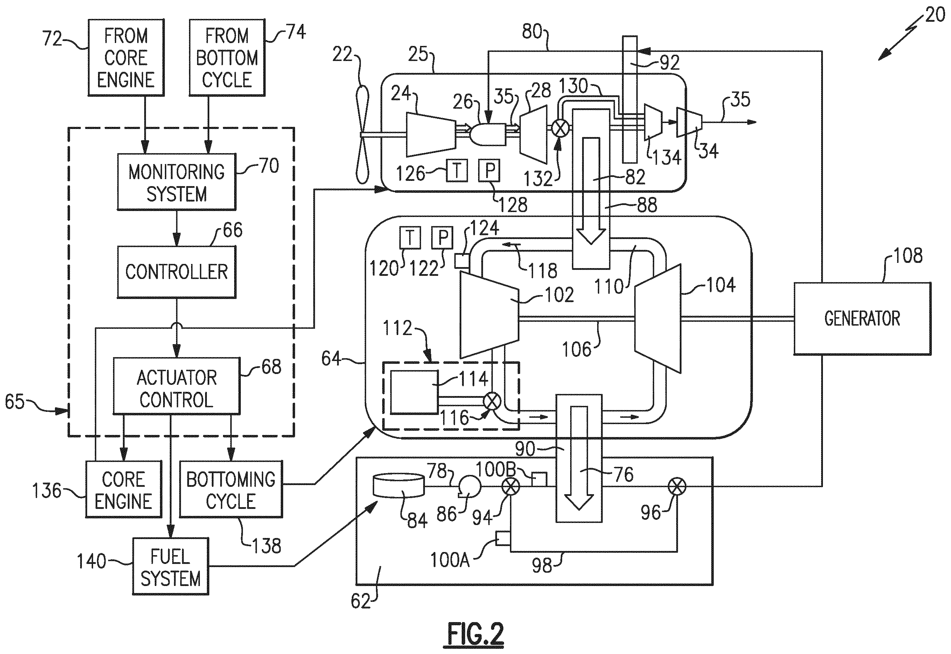

Referring to Figure 2 with continued reference to Figure 1, the cryogenic fuel system 62 includes at least a fuel tank 84 and a fuel pump 86 to provide the liquid fuel flow 78 through a fuel passage to the combustor section 26. The example fuel system 62 is configured to provide a hydrogen based fuel such as a liquid hydrogen (LH₂). Although hydrogen is disclosed by way of example, other cryogenic, non-carbon based fuels could be utilized and are within the contemplation of this disclosure.

An exhaust heat exchanger 92 provides further heating and transformation of fuel into the vaporized fuel flow 80. The liquid fuel 78 accepts heat 76 from a working fluid 118 in a fuel/working fluid heat exchanger 90. An additional amount of heat is input into the fuel flow in the exhaust heat exchanger 92. Additional heat input may be utilized to generate the vaporized fuel flow 80. The fuel flow may be in a mixed fluid/vapor state at other locations along the fuel flow path and accept and reject heat from other systems.

The fuel in the tank 84 includes features for storing a cryogenic fuel at temperatures required to maintain the fuel in a liquid phase. Temperatures required to maintain the cryogenic fuel in a liquid phase may be as low as about -412°F. In one example embodiment, the cryogenic fuel is maintained at a temperature below 0 °F. In another example embodiment, the fuel is maintained in the tank 84 at temperatures below -100 °F. The cryogenic fuel may be maintained at temperatures below about -150 °F and as low as about -435 °F.

The fuel system 62 further includes a bypass passage 98 where all or a portion of the liquid fuel flow 78 may be routed around the fuel/working fluid heat exchanger 90. First and second bypass valves 94, 96 provide for control of bypass flow through the passage 98. Sensors 100A-B are shown schematically and provide information indicative of the cryogenic fuel flow 78. The sensors 1 00A-B may provide information indicative of a flow rate, a temperature and information that may be used to determine a capacity of the fuel flow 78 to accept heat 76. The capacity of the fuel flow to accept heat 76 may vary depending on fuel demand in the core engine 25. The capacity to accept heat 76 may also vary based on other factors and operating parameters of the propulsion system 20.

The low temperatures of the cryogenic fuel 78 provide a source of heat absorption that is utilized to cool the working fluid 118 of the bottoming cycle 64. The bottoming cycle 64 recovers thermal energy otherwise lost as waste heat exhausted through the nozzle 32.

The bottoming cycle 64 includes a closed circuit 110 within which the working fluid 118 circulates. The working fluid 118 is heated in the heat exchanger 88, compressed in a bottoming compressor 102 and expanded through bottoming turbine 104 to generate shaft power 82 to drive a shaft 106. In one example embodiment, the shaft 106 is coupled to a generator 108. The shaft 108 may be coupled to drive other engine or aircraft accessory or auxiliary systems.

The closed circuit 110 includes a volume control system 112 configured to vary a volume of working fluid 118 that circulates through the bottoming compressor 102 and bottoming turbine 104. The volume control system 112 includes a chamber 114 in communication with the closed circuit 110 through a control valve 116. The chamber 114 may be operated to receive a portion of the working fluid 118 to reduce a volume within the closed circuit 110. The chamber 114 may be operated to hold working fluid 118 for injection into the closed circuit 110. The variation in a volume of the working fluid may be utilized to adapt heat absorption capacity and thereby adjust operation of bottoming cycle 64.

The bottoming cycle 64 includes sensors for monitoring conditions that includes a temperature sensor 120, a pressure sensor 122 and sensor 124. The sensor 124 is configured to provide information indicative of the working fluid 118. The information regarding the working fluid 118 may include pressure, temperature, flow, and any other parameter that provides information indicative of a capacity to absorb heat. Moreover, the sensor 124 may also provide information indicative of compressor and/or turbine operation.

The core engine 25 is monitored by sensors that provide information of a temperature and pressure at select locations. A temperature sensor 126 and a pressure sensor 128 are shown schematically and represent the plurality of sensors arranged throughout the core engine 25. Information regarding temperature and pressure at different locations within the core engine 25 is used to control operation and adjust operation of devices in the propulsion system 20.

In one example embodiment, the core engine 25 includes a bypass passage 130 for routing a portion of the exhaust gas flow 35 around the heat exchanger 82. A flow control device 132 is provided for adjusting flow through the bypass passage 130.

The core engine 25 may also include an exhaust compressor 134 that is operated to control flow through the heat exchangers 88, 92. Accordingly, the exhaust compressor 134 is a feature that enables additional control over heat input into the bottoming cycle 64.

The control system 65 is operated to align operation of the fuel system 62, the bottoming cycle 64 and the core engine 25 to maximize power recovery in the bottoming cycle 64 without limiting operation of the core engine 25. The example control system 65 includes a monitoring system 70 that receives information from sensors providing information indicative of operation of the core engine and the bottoming cycle indicated at 72 and 74, respectively. The monitoring system 70 may also receive information from other sources that might be useful for operating the propulsion system 20.

An actuator control 68 is schematically shown and generates commands and/or control signals to actuate various systems and devices within the core engine 25, bottoming cycle 64 and the fuel system 62. Control signals for the core engine 25, the bottoming cycle 64 and the fuel system 62 are schematically indicated at 136, 138, and 140 respectively. The signals 136, 138 and 140 may include any control command, message devices or communication utilized to initiate and control operation of control devices for varying operation and located throughout the propulsion system 20.

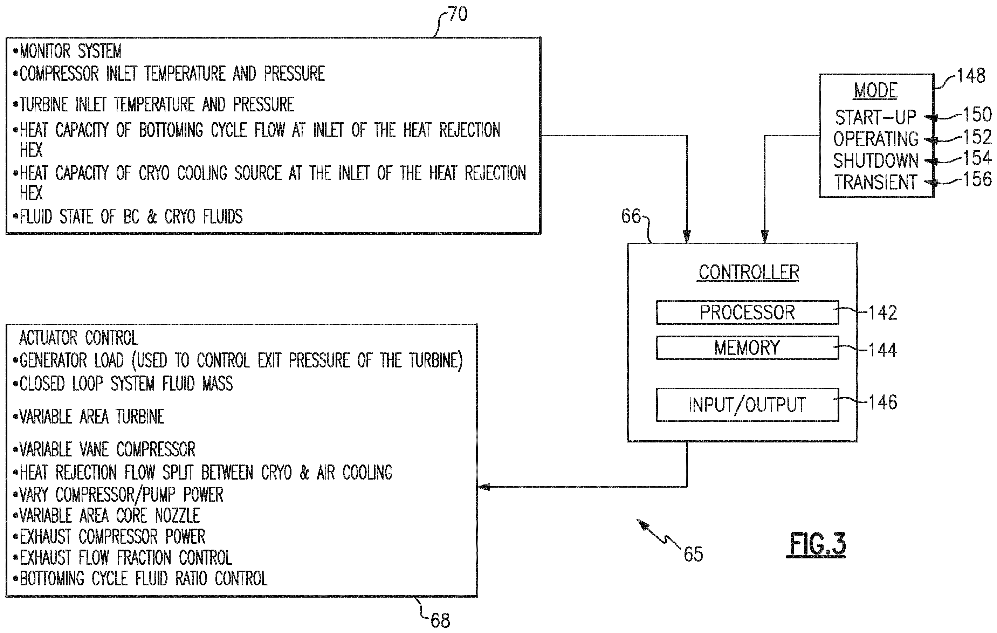

Referring to Figure 3, with continued reference to Figure 2, the control system 65 includes the controller 66 that is programmed to operate the actuator control 68, and thereby the actuators, valves and any other control devices provided in the core engine 25, the fuel system 62, and the bottoming cycle 64 of the propulsion system 20. The example controller 66 is a device and system including a processor 142, a memory device 144 and an input/output module 146 for performing necessary computing or calculation operations of the control system 65. The controller 66 may be specially constructed for operation of the control system 65, or it may comprise at least a general-purpose computer selectively activated or reconfigured by software instructions stored in a memory device. The controller 66 may further be part of full authority digital engine control (FADEC) or an electronic engine controller (EEC).

The controller 66 may be in communication with or include a mode module 148 that defines operation of the propulsion system 20 according to predefined modes. In one example embodiment, the mode module 148 defines operation for a start-up mode 150, an operating mode 152, a shut-down mode 154 and a transient mode 156. Each of the modes may include predefined operating settings for the actuators of the propulsion system 20. Although, several operating modes are disclosed by way of example, other operating modes may also be utilized and are within the scope and contemplation of this disclosure.

The monitoring system 70 provides information to the controller 66 that is indicative of operation. The monitoring system 70 receives information from the sensors and devices arranged throughout the propulsion system as previously described. The information from the sensors, actuators, and other devices throughout the propulsion system 20 are utilized to determine information that utilized by the controller 66 to determine how to vary operation. The information determined from the monitoring system 70 may be directly obtained, such as for example, inlet temperature and temperature for the compressor section 24 and turbine section 28 of the core engine. Additionally, inlet temperature and pressure for the bottoming compressor 102 and the bottoming turbine 104 may also be determined or directly obtained. In one example, information regarding the inlet temperatures and pressures may be used to determined horsepower extraction from the generator 108. Moreover, inlet temperatures and pressures may be used as a factor to determine a condition of the working fluid 118, heat absorption capability as well as other operating parameters. The temperatures and pressures of the working fluid 118 may be used to determine the heat capacity of the bottoming cycle 64. In one example, the heat capacity of the bottoming cycle 64 represents the capacity of the bottoming turbine 104 to generate shaft power.

The information gathered by the monitoring system 70 may also be utilized to determine a heat absorption capacity of the cryogenic fuel flow 78. Temperatures of the working fluid flow 118 and the fuel flow 78 at the fuel/working fluid heat exchanger 90 may be used to determine the current capability of the fuel to absorb heat. The same information may be utilized to determine a state of the cryogenic fuel 78. For example, temperature and pressure information of the cryogenic fuel would provide an indication of whether the fuel flow is in a gaseous, liquid, mixed or supercritical state.

Although several example monitoring system parameters are explained by way of example, other parameters may be measured and/or derived from available sensor information and used by the controller 66 to determine a desired action to tailor operation. Such additional parameters are within the scope and contemplation of this disclosure.

The actuator control 68 provides for the actuation of devices to alter and tailor operation of the bottoming cycle 64. In one example embodiment, a load created by operation of the generator 108 may be utilized to control operation of the bottoming turbine 104. Increased loads on the bottoming turbine 104 may generate higher temperatures and pressures in contrast to lighter loads that may reduce temperatures and pressures.

A volume of the working fluid 118 may be altered to control a fluid mass, and thereby may change heat absorption capacity. The main turbine section 28, and/or the bottoming turbine 104 may be a variable area turbine to enable adjustment of power output. The main compressor section 24 and the bottoming compressor 102 may include variable vanes to enable adjustment of operation.

Cooling of the working fluid 118 may be altered by routing flow through bypass passage 98 of the fuel system 62. Such bypass flow around the fuel/working fluid heat exchanger 90 would provide for adjustment of the temperature of both the working fluid 118 and the fuel flow 78.

In another example embodiment, the exhaust nozzle 34 may be a variable area nozzle to control and vary the amount of heat recovered from the exhaust gas flow 35 in the heat exchangers 88, 92. The variable area nozzle may slow the exhaust gas flow such that additional heat is input, or may increase the flow to reduce heat input.

The example actuator control 68 may operate the bypass valve 132 to route a portion of the exhaust gas flow 35 around the heat exchanger 88 to provide additional control over heat 82 input into the working fluid 118. The exhaust compressor 134 may be operated to further control exhaust gas flow and thereby heat input into the working fluid 118.

Although several example control devices, system and actuators are described and explained by way of example, other control devices that provide for control of and tailoring of bottoming cycle operation could be utilized and are within the contemplation and scope of this disclosure.

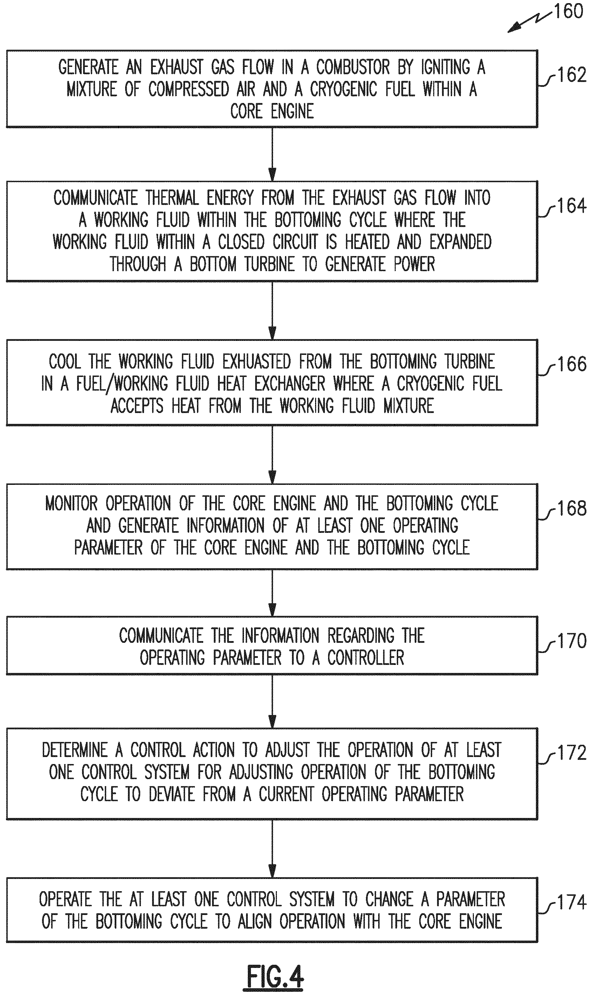

Referring to Figure 4 with continued reference to Figures 1 and 2, a flow diagram of an operation embodiment of propulsion system 20 is shown and generally indicated at 160. Operation beings with the generation of an exhaust gas flow as indicated at 162. A cryogenic fuel is mixed with compressed air and ignited to generate the exhaust gas flow 35. Expansion through the turbine section 28 generates power utilized to create a propulsive thrust. In the disclosed example embodiments, a large portion of thrust is generated by the fan section 22. Generation of the exhaust gas flow 35 includes the generation of heat that is communicated as thermal energy into the working fluid 118 of the bottoming cycle 64 as is indicated at 164.

The bottoming cycle 64 creates power through the pressurization, heating, and expansion of the working fluid 118 within the closed circuit 110. Expansion through the bottoming turbine 104 creates a power output to drive the generator 108. The capacity of the working fluid 118 to recover heat from the exhaust gas flow 35 is determined by the amount of cooling that can be accomplished through expansion through the bottoming turbine 104 and by the cryogenic fuel flow 78. The more heat that can be transferred into the fuel flow 78, the more heat that can be absorbed from the exhaust gas flow 35 by the working fluid 118.

The working fluid 118 is cooled by the cryogenic fuel flow 78 in the fuel/working fluid heat exchanger 90 as indicated at 166. The extreme cold temperatures of the cryogenic fuel flow 78 provide a significant, although not unlimited capacity for cooling the working fluid 118. The capacity of the fuel flow 78 to absorb heat is limited by the demands of the core engine 25. Operation of the core engine 25 may require more fuel flow 78 that changes heat absorption and thereby may alter operation of the bottoming cycle 64. The example control system 65 provides for the tailoring of operation to compensate for changes to optimize energy recovery for a current operating condition. The possible amount of energy recovery may increase or decrease depending on current operation and the example control system 65 is configured to adapt to the changes to optimize energy recovery by the bottoming cycle 64.

The control system 65 includes the monitoring system 70 that provides for monitoring of operation of the core engine and the bottoming cycle as indicated at 168. Information indicative of operation is gathered in the monitoring system 70 to generate information that is indicative of at least one operating parameter of the core engine 25 and the bottoming cycle 64. The disclosed example monitoring system 70 may be an integral part of the controller 66 or a number of separate systems that communicate information directly to the controller 66. Significant amounts of information are gathered during operation of the core engine 25 and the bottoming cycle 64. All, or part of the gathered information may be utilized and is communicated to the controller 66 as indicated at 170. The communicated information is utilized to determine how to adapt operation of the bottoming cycle 64 as is indicated at 172.

The determined actions include control actions that are generated to actuate one, several or a combination of actuators or control devices that alter operation and adjust operation of the bottoming cycle 64 to deviate from a current operating point. The control actions may include, for example, altering the amount of heat input into the bottoming cycle 64, altering the amount of the bottoming cycle may accept and/or the amount of heat that may be output from the bottoming cycle into the fuel flow 78. Additionally, loads on the bottoming cycle may be arranged to alter operation. Although several example control actuation scenarios are shown and described in this disclosure, other combinations of actions by control devices could be utilized to effect changes in bottoming cycle operation.

The control system 65 provides for the operation of the control device, actuator, or some combination of devices to change at least one operating parameter of the bottoming cycle 64 to align operation with that of the core engine 25 as indicated at 174. The operation of the control system 65 to adjust operation of the bottoming cycle 64 may occur continually during engine operation. Alternatively, the control system 65 may alter operation based on one of several operating modes 148 (Figure 3) and/or according to a predefined schedule that matches a specific desired operating sequence.

Accordingly, disclosed example control system 65 provides for the operation and variation of the bottoming cycle operation to adapt, align, and optimize operation based on current operating conditions of the propulsion system 20.

Although embodiments of this disclosure have been shown, a worker of ordinary skill in this art would recognize that modifications would come within the scope of this disclosure. For that reason, the following claims should be studied to determine the true scope and content of the invention.

## Claims

1. An aircraft propulsion system (20) comprising:
a core engine (25) comprising a compressor configured to compress an inlet airflow and communicate the inlet flow to a combustor (26) to generate an exhaust gas flow (35), a turbine section (28) configured to expand the exhaust gas flow (35) therethrough to generate power used to drive the compressor and a propulsive fan (22);
a cryogenic fuel system (62) comprising a cryogenic fuel storage tank (84), and a fuel flow path for routing a cryogenic fuel to the combustor (26) of the core engine (25);
a bottoming cycle (64) configured to heat a working fluid (118) within a closed circuit (110) is heated and expand the working fluid (118) through a bottoming turbine to generate shaft power;
a first heat exchanger (88) configured to transfer heat the working fluid (118);
a second heat exchanger (90) configured to cool the working fluid (118with the cryogenic fuel;
a monitoring system (70) configured to generate information indicative of operation of the core engine (25) and the bottoming cycle (64);
at least one actuator control (68) configured to vary a parameter of the bottoming cycle (64); and
a controller (66) programmed to operate at least one control system (65) based on information from the monitoring system (70) to adjust operation of the bottoming cycle (64) to correspond to operation of the core engine (25).

2. The aircraft propulsion system (20) as recited in claim 1, wherein the controller (66) is further programmed to vary operation based on a predefined operating mode, wherein the predefined operating mode comprises at least one of a startup mode (150), an operating mode (152), a shutdown mode (154), and a transient mode (156).

3. The aircraft propulsion system (20) as recited in claim 1 or 2, wherein:
the monitoring system (70) is configured to generate information indicative of at least one of a temperature and a pressure of the compressor (24); and/or
the monitoring system (70) is configured to generate information indicative of at least one of a temperature and a pressure of the turbine section (28).

4. The aircraft propulsion system (20) as recited in claim 1, 2 or 3, wherein the monitoring system (70) is configured to generate information indicative of a heat capacity of a bottoming cycle flow at an inlet of the second heat exchanger (90) including a capacity for a cryogenic fuel flow (78) to accept heat from the working fluid (118) of the bottoming cycle (64).

5. The aircraft propulsion system (20) as recited in any preceding claim, wherein:
the monitoring system (70) is configured to generate information indicative of a fluid state of the cryogenic fuel flow (78) within the second heat exchanger (90); and/or
the monitoring system (70) is configured to generate information indicative of a fuel demand by the core engine (25).

6. The aircraft propulsion system (20) as recited in any preceding claim, wherein the at least one control system (65) comprises:
a flow control device (86) for adjusting a flow rate of the cryogenic fuel through the second heat exchanger (90); and/or
a valve (94) for controlling a flow of the cryogenic fuel through a bypass passage (98) configured to route a portion of the cryogenic fuel flow around the second heat exchanger (90).

7. The aircraft propulsion system (20) as recited in any preceding claim, further comprising a generator (108) configured to be driven by the bottoming turbine (104), wherein the controller (66) is further programmed to adjust a load on the bottoming turbine (104) for controlling operation of the bottoming cycle (64).

8. The aircraft propulsion system (20) as recited in any preceding claim, wherein the bottoming cycle (64) further comprises a working fluid volume control system (112) configured to vary a quantity of working fluid (118) within the closed circuit (110) to adjust operation of the bottoming cycle (64), and the controller (66) is further programmed to operate the working fluid volume control system (112).

9. The aircraft propulsion system (20) as recited in any preceding claim, wherein:
the control system (65) comprises an exhaust gas flow control device (132) for controlling an amount of the exhaust gas flow (35) through the first heat exchanger (88) and the controller (66) is further programmed to operate the exhaust gas flow (35) device to control heat input into the working fluid flow (118) for adjusting operation of the bottoming cycle (64); and, optionally,
the exhaust gas flow control device (132) comprises at least one of an exhaust compressor (134), a variable area exhaust nozzle (34), and an exhaust bypass (130) configured to route a portion of the exhaust gas flow (35) around the first heat exchanger (88).

10. A method of operating an aircraft propulsion system (20) comprising a core engine (25) and a bottoming cycle (64), the method comprising:
generating an exhaust gas flow (35) in a combustor (26) by igniting a mixture of compressed air and a fuel (78) within the core engine (25);
communicating thermal energy from the exhaust gas flow (35) into a working fluid (118) within the bottoming cycle (64) where the working fluid (118) within a closed circuit (110) is heated and expanded through a bottoming turbine (104) to generate shaft power;
cooling the working fluid (118) exhausted from the bottoming turbine (104) in a fuel/working fluid heat exchanger (90) where a cryogenic fuel (78) accepts heat from the working fluid (118);
monitoring operation of the core engine (25) and the bottoming cycle (64) and generating information of an operating parameter of at least one of the core engine (25) and the bottoming cycle (64);
communicating the information regarding the operating parameter to a controller (66);
determining a control action to adjust the operation of at least one control system (65) for adjusting operation of the bottoming cycle (64) based on the operating parameter;
initiating operation of the at least one control system (65) to change operation of the bottoming cycle (64) to align operation of the bottoming cycle (64) with an operation of the core engine (25).

11. The method of operating the aircraft propulsion system (20) as recited in claim 10, wherein determining the control action further comprises determining an optimal amount of heat capable of being absorbed by a flow of the cryogenic fuel.

12. The method of operating the aircraft propulsion system (20) as recited in claim 10 or 11, wherein the control action comprises:
adjusting a flow of the cryogenic fuel through a fuel/working fluid heat exchanger (90) to adjust heat input from the working fluid (118) to the cryogenic fuel (78); and/or
bypassing a portion of the cryogenic fuel flow (78) around the fuel/working fluid heat exchanger (90).

13. The method of operating the aircraft propulsion system (20) as recited in any of claims 10-12, wherein the at least one control system (65) comprises an exhaust gas flow control device (132) for controlling an amount of the exhaust gas flow (35) through a heat exchanger (88) transferring heat into the working fluid (118), and the method further comprises operating the exhaust gas flow device (132) to control heat input into the working fluid flow (118) for adjusting operation of the bottoming cycle (64).

14. The method of operating the aircraft propulsion system (20) as recited in any of claims 10-13, wherein the bottoming cycle (64) further comprises a working fluid volume control system (112) configured to vary a quantity of working fluid (118) within the closed circuit (110) to adjust operation of the bottoming cycle (64), and the method further comprises operating the working fluid volume control system (112) to adjust the volume of working fluid flow (118) to align operation of the bottoming cycle (64) with the core engine (25).

15. The method of operating the aircraft propulsion system (20) as recited in any of claims 10-14, wherein the aircraft propulsion system (20) further comprises a generator (108) driven by the bottoming turbine (104), and the method further comprises adjusting a load on the bottoming turbine (104) to align operation of the bottoming cycle (64) to operation of the core engine (25).
